(19) **Europäisches Patentamt**
**European Patent Office**
**Office européen des brevets**

(11) **EP 2 383 915 B1**

(12) **EUROPEAN PATENT SPECIFICATION**

(45) Date of publication and mention
of the grant of the patent:
**17.04.2013 Bulletin 2013/16**

(51) Int Cl.:
**H04B 17/00** $^{(2006.01)}$

(21) Application number: **10290227.7**

(22) Date of filing: **30.04.2010**

(54) **Method and apparatus for identifying a transmitting device**

Verfahren und Vorrichtung zur Identifizierung einer übertragenden Vorrichtung

Procédé et appareil pour l'identification d'un dispositif de transmission

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**02.11.2011 Bulletin 2011/44**

(73) Proprietor: **Alcatel Lucent**
**75007 Paris (FR)**

(72) Inventors:
• **Kuzminskiy, Alexandr M.**
**Swindon**
**Wiltshire SN5 5BG (GB)**
• **Kennedy, Irwin O.**
**Londonderry BT47 6HY (GB)**

(74) Representative: **Sarup, David Alexander**
**Alcatel-Lucent Telecom Limited**
**Unit 18, Core 3**
**Workzone, Innova Business Park**
**Electric Avenue**
**Enfield EN3 7XU (GB)**

(56) References cited:
**US-A1- 2007 025 265     US-A1- 2008 244 707
US-A1- 2009 305 665**

• **KENNEDY I O ET AL: "Passive Steady State RF Fingerprinting: A Cognitive Technique for Scalable Deployment of Co-Channel Femto Cell Underlays", NEW FRONTIERS IN DYNAMIC SPECTRUM ACCESS NETWORKS, 2008. DYSPAN 2008. 3RD IEEE SYMPOSIUM ON, IEEE, PISCATAWAY, NJ, USA, 14 October 2008 (2008-10-14), pages 1-12, XP031353285, ISBN: 978-1-4244-2016-2**
• **JACKSON E: "Detecting intrusions at layer one: device fingerprinting for network access authorization", THESIS IOWA STATE UNIVERSITY,, 1 May 2006 (2006-05-01), pages 1-51, XP007912242,**

EP 2 383 915 B1

## Description

### Background

This invention relates to identifying a transmitting device. In particular it relates to identifying a radio transmitter. More particularly, but not exclusively, it relates to a mobile radio transmitter such as that in a mobile cellular telephone or similar device.

Cellular mobile communication systems utilise a number of base station transceivers positioned to provide wireless communication coverage over an area. Femto cells are also becoming more common which divide the area into even smaller regions.

It is important to be able to identify a specific mobile terminal (such as a mobile phone) when it is connected to or using the network and as it moves between base stations, femto cells and so on.

Whilst each mobile device or terminal is provided with an International Mobile Subscriber Identification (IMSI) number which can be exchanged with the network, this can create problems and there are also security and privacy issues.

techniques for identifying transmitters by analysing characteristics of received signals are known, for example, transient signal methods. However, these types of techniques have difficulty distinguishing between very similar transmitters. Transient techniques also require costly high sample rate receivers and do not take into account the actual wireless channel so that, for example, in a long delay spread channel such as in an urban area where multipath reflections can occur, distinguishing features can be corrupted. It is highly desirable to be able to identify a mobile device when it first contacts a base station.

Documents US-A-2009 305665 and US-A-2007 025265 disclose transmitter identification schemes.

The present invention arose in an attempt to provide a method of identifying a transmitting device.

### Brief Description of the Invention

According to the present invention in a first aspect there is provided a method of identifying a transmitting device according to claim 1.

Embodiments comprise generating a database comprising one or more samples of a particular signal transmitted from one or more mobile devices and a test phase in which an unknown device is caused to generate said signal and this is compared with each or a selection of the samples in the database, the samples being subject to processing to make them as close as possible to the receipt test sample, and the device under test being considered to be the same as the device generating a signal which, after said parameter processing, generates a signal which is the closest to the signal generated by the sample device on the test.

When an RF device transmits a standard signal, then the signal received by a receiving device may vary according to the transmitting device and conditions. This is because characteristic non-linear analogue signal processing artefacts particular to the unique transmitting device are imbued in the signal before transmission. It is believed that this phenomenon takes place in the active circuitry between a digital to analogue converter and antenna, for example at an up conversion mixing stage and power amplification stage. If exactly the same symbols are transmitted by every transmitting device, then the only difference in samples received at the receiver are due to the different transmitters, noise and interference. By producing a database of different transmitters, then transmitters can be recognised by their characteristic RF fingerprints.

The signal from each test candidate may be subject to frequency offset correct, variable delay, variable phase adjustment, to a plurality of passes through different tap, or to any combination of these.

The particular symbol may be a particular RACH (Random Access Channel) preamble. This can be made constant and repeatable.

The signal from the device under test may be split into a plurality of fragments and each fragment being compared with a signal from the training database in order to determine the device under test.

In a further aspect the invention provides apparatus for identifying a transmitting device according to claim 12.

### Brief Description of the Drawings

Embodiments of the invention will now be described, by way of example only, with reference to the accompanying drawings in which:

Figure 1 shows schematically a test regime for testing and identifying an unknown mobile device;
Figure 2 shows an alternative testing regime;
Figure 3 shows a training regime for obtaining samples in a database; and
Figure 4 shows a testing technique.

**Description of Some Embodiments**

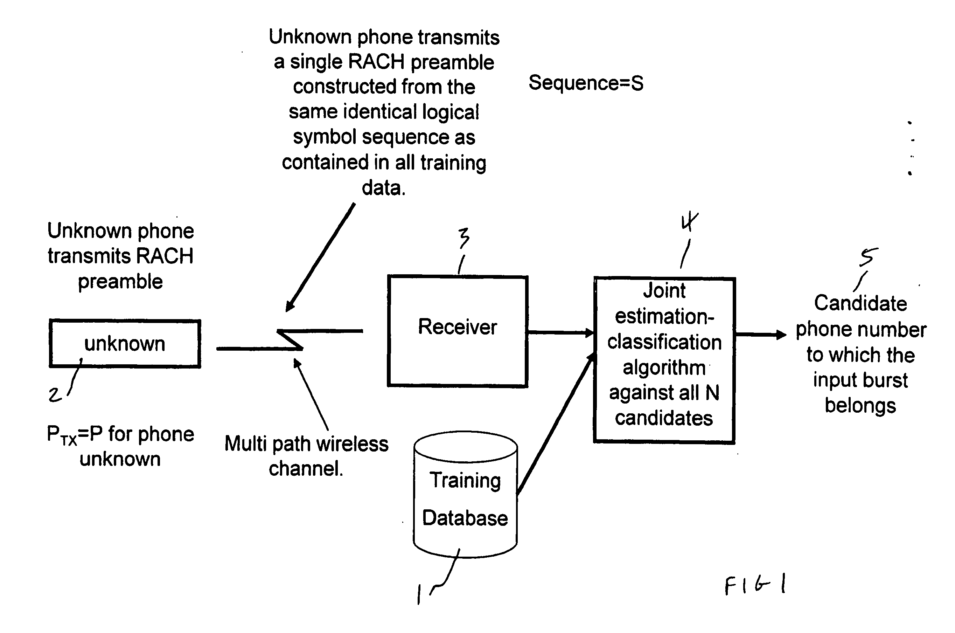

Referring to Figure 1, there is shown schematically an embodiment for identifying a transmitting device. The transmitting device may be a mobile telephone, typically a UMTS mobile telephone.

A Random Access Channel (RACH) is an uplink transport channel used and known in mobile telephone systems. An RACH preamble is a message of a particular length (4096 chips) which consists of 256 repetitions of a signature of 16 chips. Although the RACH preamble can be varied, it is possible to program a Broadcast Channel (BCH) from a cellular base station to a mobile phone to restrict the phone to transmit a particular RACH message, comprising a particular combination of logical symbols. In some embodiments of the invention, devices are restricted to use a particular RACH preamble so that each device is constrained to transmit the same signal for testing (and training) purposes. In other embodiments, a standard signal or combination of logical symbols may be transmitted. It does not matter what the signal is provided all transmitters to be tested are made to transmit the same signals. The RACH mechanism is a convenient one for obtaining a signal.

A training database 1 is firstly set up and includes samples of the transmitted RACH preamble (or other known and repeatable message) from a number of candidates, mobile telephone or other transmitter devices. Each sample may be obtained by simply causing a sample device to transmit the particular RACH preamble or other known message wirelessly and recording and/or sampling the received message. In this way, a database is built up of all candidate transmitters, against which a particular transmitter under test can be compared in order to try to identify the transmitter as one of the candidate transmitters, signals from which have already been stored in the database 1. The test samples are preferably obtained in a non-multipath environment.

In a testing sequence, an unknown device 2 is caused to transmit the same known RACH preamble. This is transmitted over a wireless channel to a receiver.

Whereas the training sample will generally be collected in a controlled environment in which there is no multipath reflection, in practice the testing phase may be done in a multipath environment. That is, the signal may be reflected by objects in the transmission path or other effects may happen which cause the signal to be transmitted via multiple paths to the receiver. The signal received over each path will likely differ in magnitude, in delay time, in phase and/or in other aspects. The multipath RACH preamble is received at a suitable receiver 3. Details of the receiver and the mobile phone 2 will, of course, be well known to those skilled in the art and will depend upon the particular transmitting mechanism being used.

In a very general aspect, the received signal received by the receiver 3 is compared in some way at a joint estimation-classification algorithm node 4 against a number of candidates from the training database 1. It may be compared against all candidates stored in the database or only a selected number and these may be pre-filtered by mechanisms as described below or otherwise. Details of the joint estimation-classification algorithm and apparatus will be described further below.

By comparing the received signal from the unknown device 2 against each of the samples (or a subset thereof) in the training database, outputs will be obtained which represent the difference (residual powers) between the actual signal received and the particular training signal. A decision can then be taken which of the training signals is most similar to the signal actually received from the test device. The processing inside the algorithm may vary phase, frequency offset, delay and so on of the training signal in order to simulate multipath or other effects. In this event, for each training signal a number of items of data are therefore obtained, each representative of a difference between a particular training database signal and the signal received from the device under test and these can be processed so that a determination is then made as to which training signal (after processing) is closest to that of the received signal from the unknown device.

After all the required training signals have been compared, the signal from which residual power if the least is closest is considered to represent a "match" to the training device and therefore the device from which the training signal was obtained is considered to be the device under test. In this way, the device under test is identified 5.

In other words, a pre-stored database of training files is linearly distorted by the estimated channel (i.e. assimilation of an estimation of the actual channel, multipath channel, etc from which the test signal is transmitted) and then the difference is found between the received signal and the distorted set of training signals. The training signal which is found to be least different (i.e. closest) to the received signal is determined to indicate the transmitter.

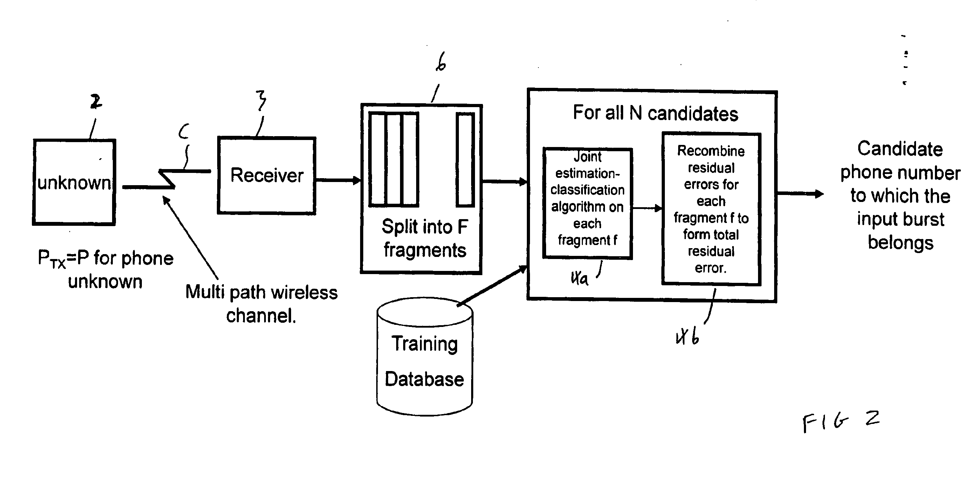

Figure 2 shows an alternative test regime, which can help to overcome non-stationary channel conditions. This may be used in particular for UMTS (Universal Mobile Telephone System) systems and others. In this example, the unknown transmitter 1 is again used to transmit an RACH preamble. This is typically a 1ms preamble. In this example, the 1ms RACH preamble is transmitted over the multipath channel C to a receiver 3. It is then split at a splitter 6 into a plurality of F fragments. In a non-limiting example, a fragment is a subset of the 1ms preamble samples. For a 20MSamples per second receiver, there would be 20K (20000) Samples per 1ms preamble. This 20K sample is split into fragments (assuming the channel is approximately stationary in a fragment). Thus there are 10 fragments, a single fragment would contain say 2000 samples.

The reason this is done is because where there can be physical movement of the phone, base station or the environment, then the paths making the channel will change. The result is a non constant channel. Therefore, it is required to estimate the channel over shorter periods of time, during which it is assumed to be constant.

In the estimator/classifier 4, a joint estimation-classification algorithm 4a is applied to each separate fragment f, and residual errors are obtained for all fragments f. The residual errors (signals representative of the difference between) are combined for each fragment f in order to form a total residual error or difference 4b. That is, residual signals G(n,f) denotes a residual signal for candidate N fragment *f*. All fragments 1 to *f* are then recombined at 4b to form a complete residual signal G(n). This residual signal G(n) is then used to make the final decision as to which candidate device the received RACH preamble is from. This process comprising fragmentation followed by reassembly of the residual symbol signal helps to overcome non-stationary channel conditions. The channel estimation and repeated subtraction on each fragment is performed separately. For each fragment a residual error is obtained. These residual errors are combined to find the total residual error.

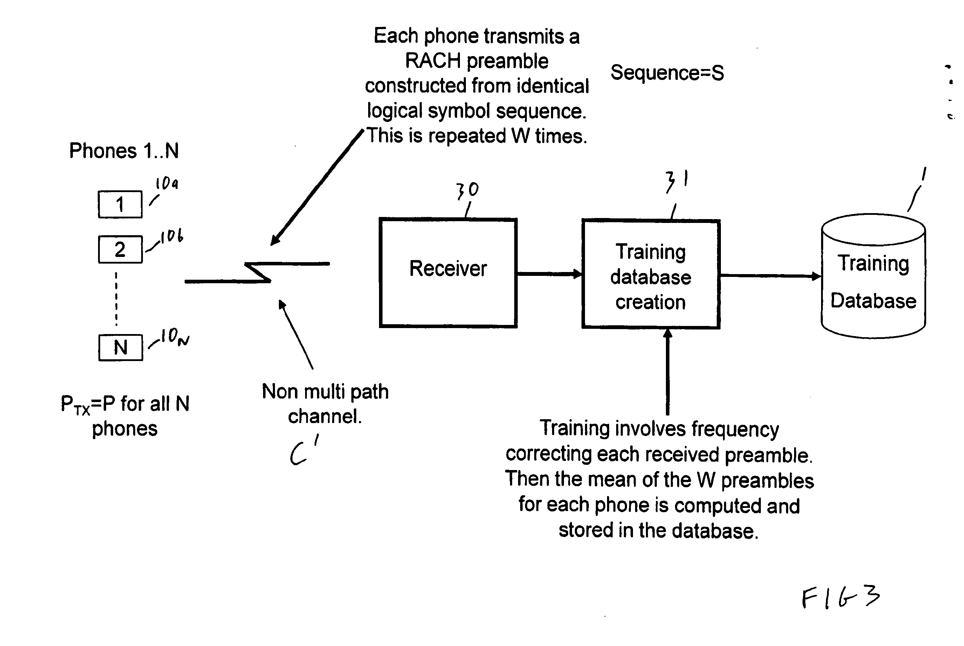

Figure 3 shows schematically a training process. A plurality of training devices such as phones 10a, 10b to 10n are each used in turn to transmit the same RACH preamble constructed from an identical logical symbol sequence. Each transmission is received at a receiver 30. This is done under controlled conditions in a non-multipath channel C.

In some embodiments the RACH preamble is transmitted from each device a number of times, say W times. At a training database creation means 31, each received preamble may, if appropriate, be frequency corrected (to make sure that the signals from each phone are of the same frequency. This is because different phones have different internal timing references. There will be slight differences in these references and therefore signals produced will be of slightly different frequencies. It is necessary to correct these frequency offsets so all signals from all phones have the same relative frequency, to allow meaningful comparison. The mean of the W preambles for each training device is determined and stored in the training database 1.

Although in some embodiment it may only be necessary to transmit a preamble once from each device and storing this value in the database, it is preferable to take a number W of sample and to obtain the mean of these values since they may differ slightly from transmission to transmission.

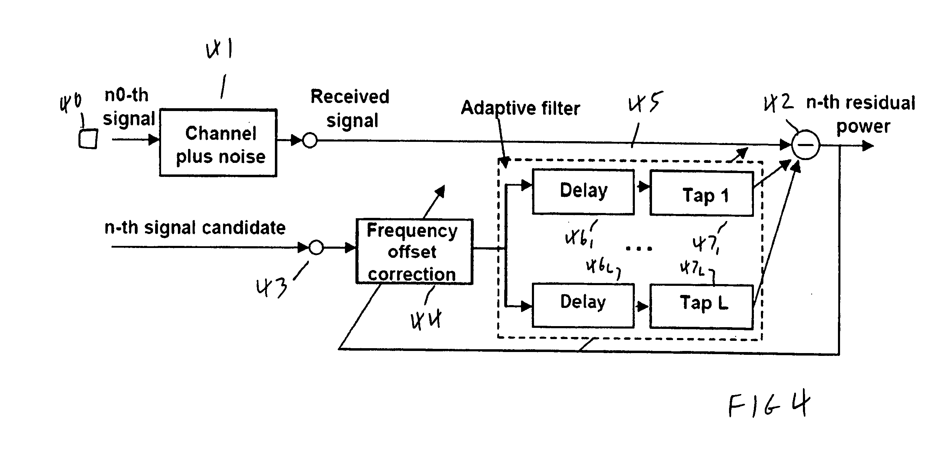

Figure 4 shows a testing arrangement. When the devices under test are UMTS devices, then the RACH preamble, as described above, is one which is very convenient for use as the repeatable test signal. The RACH preamble logical symbol sequence is dependent upon base station ?? code and the particular RACH preamble signature used. In embodiments the broadcast channels of the BCH (Broadcast Channel) must be programmed to restrict the device to only a single logical symbol sequence. This ensures that all devices under test, and during the initial training phase, transmit an identical symbol sequence. Thus, the only differences are device specific representations of the waveforms radiated due to non-linear signal processing.

It is also important to transmit with the same power at training time and testing time since different transmit powers introduce differences to the non-linear signal processing of the transmitter. In the case of UMTS RACH preambles, transmit power can be manipulated using the broadcast channels from the base station. In alternative systems where transmit power cannot be kept constant, then training is most preferably performed for different transmit powers and thus several values are stored in the database for each device, differing in transmit power.

Referring to Figure 4, a signal under test 40 is used to transmit the standard signal, such as the standard RACH preamble over a broadcast channel 41. Thus, the signal received comprises the standard RACH preamble modified in a specific way due to non-linear signal processing and other effects of the actual device 40. Each of the candidate signals from the training database 1 are compared with this, although it may be modified before comparison as described. The actual comparison is a subtraction at a subtracting means 42 to obtain 'residual power'. Other methods of comparison may be used but the simple subtraction is advantageous.

In embodiments, each test candidate in turn, from the training database, such as the $n^{th}$ signal candidate 43, is applied to a variable frequency offset correction means 44 to an adaptive filter 45. In the filter 45, each signal candidate is subject to a delay 46 and tap (i.e. phase shifting) 47. Each particular combination of delay and tap simulates a particular path. By varying the delay and phase (tap), effects simulating different paths (i.e. multipaths) can be obtained. Thus, it can be advantageous to submit each $n^{th}$ signal candidate a plurality of times to a number of different combinations of delay and tap, simulating a number of different paths or multipaths. These can more effectively simulate multipaths which the actual signal under test 40 will have undergone.

These may be applied in an iterative process in a loop. Thus, in embodiments, the value of multipaths may be set to a particular number such as 5, 10, or any other number. The algorithm used then examines the error signal G(n), i.e. the output from the subtractor 42, known as the nth residual path, for each iteration of the loop L = 1:L.

The apparatus of Figure 4 may be termed an adaptive compensator.

A specific algorithm for this joint channel estimation/classification will now be described. Note that other algorithms may be used.

It is assumed that the training database of N echo-less records of UMTS RACH preambles $s_n(t)$ sampled with frequency F is available corresponding to different terminals/devices. The problem is to classify the received signal x(t), which is assumed to be one of the signals in the training at the output of a wireless channel plus noise. The main difficulty is that to remove the channel effects it is required to know the actual transmitted signal that is not known before classification. This means that generally, the channel estimation and classification problems cannot be addressed separately, i.e. the considered problem is a joint classification/channel estimation problem.

Assuming that a time interval T of T samples is available in quasi-stationary conditions with a wireless channel of L taps and taking into account that some frequency offset is possible between different records, the joint classification/channel estimation problem based on a linear adaptive compensator can be expressed as follows:

$$n_0 = \arg \min_{n=1,\ldots,N} G(n), \qquad (1)$$

$$G(n) = \min_{h_l, \delta_l, \omega} \sum_{t \in T} |x(t) - \sum_{l=1}^{L} h_l e^{-\omega n} s_n(t - \delta_l)|^2, \quad (2)$$

where G(n) is the residual power at the output of the adaptive compensator for the $n$th signal candidate, $w$, $h_l$, and $\delta_l$ are parameters representing the frequency offset, $l$th complex channel tap, and the corresponding delay.

Different techniques can be used for optimization in (2). The following simplified solution was used in one example:

- Frequency offset correction w is estimated for a single tap channel model (L = 1) by means of direct search in the interval [-$w_o$, $w_o$] with a conventional correlation based estimation of the channel tap and delay.

- For the given w and L, the channel parameters $h_l$ and $\delta_l$ are estimated by means of conventional iterative correlation based procedure of J iterations with consecutive estimation of each tap.

- For a relatively low sampling frequency of, for example, Frea = 20 MHz, the correlation based channel estimation is supported with additional precise synchronization procedure based on the oversampling of the signals in the training data based with factor Q. For records with higher sampling frequency, e.g. Frea = 200 MHz, the precise synchronization will usually not be necessary.

Note that the training database of samples corresponding to different terminals may also use a plurality of samples obtained from the same terminal or device operated under significantly different conditions in terms of transmit power, temperature or other parameters. In an experiment the following parameter values were found to work well, T = 2500, Q = 8 and $\Omega 0 = \pm 0.4$ RAD/S. These values were selected based upon experimental experience. Note that parameter T is the number of samples upon which the test is applied and this linearly relates to computational complexity but also effects algorithm performance, so a value should be selected that provides a reasonable trade off between both. Parameter L is set according to the particular circumstances.

Thus, in embodiments the actual candidate device is considered to be that which generated signal $n_o$ (equation 1) in which, from all the samples and comparisons, the value of the residual power G(n) of the signal candidate (the $n^{th}$ signal) which is least for a particular combination of test and training signals is considered to be the candidate device, i.e. the training signal for which the $n^{th}$ residual power is the lowest is considered to be from the same device.

External changes may affect the signal radiated by a transmitter. These effects can include ageing, transmit power, temperature, supply voltage and others. The algorithm training set can be extended, as described, to include signal variation caused by these external variations. Hence, for each particular transmitter in the training phase a number of different values can be stored and a number of entries made in the database for a range of temperatures, transmit powers, supply voltage and ageing variations. Thus, the transmitter can be recognised under any normal variation of external conditions. Alternatively, if a value can be fixed, it may not be necessary to make an entry for the possibilities. For example, since the transmit power of a UMTS phone can be controlled by the base station, it would not normally be necessary to store values for more than one transmit power.

If all training signals stored in the database are to be compared with each signal under test, then a large number of comparisons is necessary. In order to reduce this, various means may be used to provide a subset of the training signals against which the test device is measured. One method of doing this is to use the transient signal which is radiated at transmission switch on and switch off. When sampled at relatively low sample frequency, the transient signals still exhibit distinguishing features and these can be used as a first level of categorisation. Low sampling frequency is a low multiple of the data carrying bandwidth. For UMTS the chip rate is 3.84MChips/s so, for example, 20MSamples per second might be considered a low sample rate. As a comparison, Transient techniques typically use 500M-1000MSamples/s. For example, the distinguishing features measured by these initial filtering techniques may be used to determine the manufacturer of a device. If the manufacturer of the device under test is known, then clearly the subset of training signal against which it is to be compared only need be those from devices of that manufacturer.

Transient techniques are well known in themselves and will not be described further here. Once a subset of data has been determined, then the coherency algorithms described above can be used to do the fine level categorisation using (taps) using the determined subsets.

The number of multipath simulations achieved through iteration in the adaptive filter 45 may be set to a predetermined number such a 5 or 10. The algorithm then examines the error signal G(n) for test device 10a upon each iteration of the loop l = 1:L. In practice, when the error signal G(n) stops decreasing, the loop is exited since the minimum value of G(n) has been found. This conditional loop termination optimises execution to the correct number of paths and ensures that only valid paths are removed from the residual signals.

The frequency offset correction is necessary to vary the frequency of the training signal to bring it in line with the frequency of the test signal. Frequency offset correction is performed by modifying the training signal by a number of different frequency offsets and choosing the offset that results in a modified training signal with minimal difference to the test signal.

If the test signal, in a particular circumstance, is received via four different paths, for example, each representing a different multipath and therefore having different time and phase delays, then in the adaptive filter four sets of delays and taps may be used on four sets of the same training data. These are cross correlated and techniques used to determine if any of them is particularly close to the test signal. The multipath signal is distinguished in difference in time delay and phase delay and these are the parameters that can be simulated in the components of the adaptive filter.

In embodiments, a technique for performing identification (testing is used) based upon successive subtraction of training signal candidate (modified for frequency, timing offsets and channel effects). To do this, one must be able to construct the reference training database by summing several measurements together after adjusting each for single path phase, frequency offset and timing synchronisation offsets.

**Claims**

1. A method of identifying a transmitting device (2), comprising
   causing the transmitting device (2) to transmit a particular known signal to a receiver and comparing the received signal with a plurality of training signals from a database (1), the signals being samples of the same known signal transmitted by one or more known devices, and comparing the received signal from the transmitting device with the plurality of training signals (4) in order to classify the transmitting device as one of the known devices, wherein one or more of the training signals are subject to delay and/or phase shift processing in order to simulate multipath effects.

2. A method claimed in claim 1 wherein one or more of the training signals are processed a plurality of times with different phase and/or delay characteristics, in order to simulate multipath effects, and each of the results is compared with the unknown signal.

3. A method as claimed in any preceding claim further comprising the step (3) of generating the database using one or more samples of a particular signal ($10_a$-$10_n$)transmitted under control conditions from said one or more known devices.

4. A method as claimed in claim 3 whereas a plurality of training signals are obtained from one or more of the known devices and stored in the database (1), each sample being taken when the known device is operated at a different value of one or more selected parameters.

5. A method of claiming claim 4 whereas the parameters are temperature, transmit power, supply voltage and age.

6. A method as claimed in any preceding claim wherein a preliminary filtering is made of samples in the training database to determine a subset of training signals which are compared with the signal from the transmitting device.

7. A method as claimed in claim 6 whereas the training signals of the subset are modified for frequency, timing offsets and channel effects.

8. A method as claimed in claim 7 whereas one or more samples from the training database is used several times, each time having a different value of one or more of path phase, frequency offset and timing synchronisation.

**9.** A method as claimed in any preceding claim wherein the known signal transmitted is a predetermined random access channel (RACH) preamble.

**10.** A method as claimed in any preceding claim whereas the signal from the transmitting device is split into a number of fragments (6) and each fragment is compared with the signals from the training database.

**11.** A method as claimed in any preceding claim wherein a signal from the training base is compared a plurality of times with the signal from the transmitting device, in an iterative loop, each comparison being made with a different processing being done on the signal from the known device and, when a minimum value of a difference between the particular training signal and the signal from the transmitting device is found, processing of that training signal is terminated.

**12.** Apparatus for identifying a transmitting device, comprising
means (3) for receiving a signal transmitted from the transmitting device under test,
means (4) for receiving training signals from a training database (1) and;
an adaptive compensator (4) for comparing the signal from the transmitting device with the training signals to determine a residual power for each comparison and for comparing the residual powers to determine the identity of the transmitting device, the training database including a plurality of training signals and the apparatus being adapted to subject one or more of them to delay and/or phase shift processing in order to simulate multipath effects.

**13.** An apparatus as claimed in claim 12 wherein the adaptive compensator comprises an adaptive filter (45) for varying the delay and/or phase of training signals from the training database.

**14.** Apparatus as claimed in claim 13 including means (44) for altering the frequency of training signals from the training database.


**Patentansprüche**

**1.** Verfahren zur Identifizierung einer übertragenden Vorrichtung (2), umfassend:

Bewirken, dass die übertragende Vorrichtung (2) ein bestimmtes bekanntes Signal an einen Empfänger überträgt, und Vergleichen des empfangenen Signals mit einer Vielzahl von Trainingssignalen aus einer Datenbank (1), wobei die Signale Abtastwerte desselben von einer oder mehreren bekannten Vorrichtungen übertragenen bekannten Signals sind, und Vergleichen des von der übertragenden Vorrichtung empfangenen Signals mit der Vielzahl von Trainingsignalen (4), um die übertragende Vorrichtung als eine der bekannten Vorrichtungen einzuordnen, wobei eines oder mehrere der Trainingssignale einem Verzögerungs- und/oder Phasenverschiebungsverarbeitungsvorgang unterzogen werden, um Mehrpfadeffekte zu simulieren.

**2.** Verfahren nach Anspruch 1, wobei eines oder mehrere der Trainingssignale mehrmals mit unterschiedlichen Phasen- und/oder Verzögerungseigenschaften verarbeitet werden, um Mehrpfadeffekte zu simulieren, und ein jedes der Ergebnisse mit dem unbekannten Signal verglichen wird.

**3.** Verfahren nach einem beliebigen der vorstehenden Ansprüche, weiterhin umfassend den Schritt (3) des Erzeugens der Datenbank unter Verwendung eines oder mehrerer Abtastwerte eines bestimmten Signals ($10_a$-$10_n$), welches unter Steuerbedingungen von der besagten einen oder den besagten mehreren bekannten Vorrichtungen gesendet wird.

**4.** Verfahren nach Anspruch 3, wobei die Vielzahl von Trainingssignalen von einer oder mehreren bekannten Vorrichtungen erhalten und in der Datenbank (1) gespeichert werden, wobei jeder Abtastwert erfasst wird, wenn die übertragende Vorrichtung mit einem unterschiedlichen Wert eines oder mehrerer ausgewählter Parameter betrieben wird.

**5.** Verfahren nach Anspruch 4, wobei die Parameter die Temperatur, die Sendeleistung, die Versorgungsspannung und das Alter sind.

**6.** Verfahren nach einem beliebigen der vorstehenden Ansprüche, wobei eine Vorfilterung der Abtastdaten in der Trainingsdatenbank durchgeführt wird, um einen Teilsatz von Trainingssignalen zu bestimmen, welche mit dem Signal von der übertragenden Vorrichtung verglichen werden.

**7.** Verfahren nach Anspruch 6, wobei die Trainingssignale des Teilsatzes für Frequenz, Zeitversätze und Kanaleffekte modifiziert werden.

**8.** Verfahren nach Anspruch 7, wobei ein oder mehrere Abtastwerte aus der Trainingsdatenbank mehrmals mit jeweils einem unterschiedlichen Wert entweder der Pfadphase, des Frequenzversatzes oder der Zeitsynchronisation oder mehrerer davon verwendet werden.

**9.** Verfahren nach einem beliebigen der vorstehenden Ansprüche, wobei das übertragene bekannte Signal die vorbestimmte Präambel eines Kanals mit willkürlichem Zugriff (RACH) ist.

**10.** Verfahren nach einem beliebigen der vorstehenden Ansprüche, wobei das Signal von der übertragenden Vorrichtung in eine Anzahl von Fragmenten (6) aufgeteilt und jedes Fragment mit den Signalen aus der Trainingsdatenbank verglichen wird.

**11.** Verfahren nach einem beliebigen der vorstehenden Ansprüche, wobei ein Signal aus der Trainingsdatenbank mehrmals mit dem Signal von der übertragenden Vorrichtung in einer iterativen Schleife verglichen wird, wobei jeder Vergleich mit einer unterschiedlichen Verarbeitung auf dem Signal von der bekannten Vorrichtung durchgeführt wird und, wenn ein Mindestwert einer Differenz zwischen dem bestimmten Trainingssignal und dem Signal von der übertragenden Vorrichtung gefunden wird, die Verarbeitung dieses Trainingssignals beendet wird.

**12.** Vorrichtung zur Identifizierung einer übertragenden Vorrichtung, umfassend
Mittel (3) zum Empfangen eines von der zu prüfenden übertragenden Vorrichtung übertragenen Signals,
Mittel (4) zum Empfangen von Trainingssignalen aus einer Trainingsdatenbank (1) und;
einen adaptiven Kompensator (4) zum Vergleichen des Signals von der übertragenden Vorrichtung mit den Trainingssignalen, um eine Restleistung für jeden Vergleich zu ermitteln, und zum Vergleichen der Restleistungen, um die Identität der übertragenden Vorrichtung zu ermitteln, wobei die Trainingsdatenbank eine Vielzahl von Trainingssignalen enthält und die Vorrichtung dazu ausgelegt ist, eines oder mehrere dieser Trainingssignale einem Verzögerungs- und/oder Phasenverschiebungsverarbeitungsvorgang zu unterziehen, um Mehrpfadeffekte zu simulieren.

**13.** Vorrichtung nach Anspruch 12, wobei der adaptive Kompensator einen adaptiven Filter (45) zum Verändern der Verzögerung und/oder Phase von Trainingssignalen aus der Trainingsdatenbank umfasst.

**14.** Vorrichtung nach Anspruch 13, umfassend Mittel (44) zum Verändern der Frequenz von Trainingssignalen aus der Trainingsdatenbank.

**Revendications**

**1.** Procédé d'identification d'un dispositif d'émission (2), comprenant
commande du dispositif d'émission (2) pour qu'il émette un signal connu particulier vers un récepteur et comparaison du signal reçu avec une pluralité de signaux d'apprentissage en provenance d'une base de données (1), les signaux étant des échantillons du même signal connu émis par un ou plusieurs dispositifs connus, et comparaison des signaux reçus de la part du dispositif d'émission avec la pluralité de signaux d'apprentissage (4) afin de classifier le dispositif d'émission en tant que l'un des dispositifs connus, un ou plusieurs des signaux d'apprentissage étant soumis à un traitement de retard et/ou de déphasage afin de simuler des effets de trajet multiple.

**2.** Procédé selon la revendication 1, selon lequel un ou plusieurs des signaux d'apprentissage sont traités une pluralité de fois avec des caractéristiques de phase et/ou de retard différentes afin de simuler des effets de trajet multiple, et chacun des résultats est comparé avec le signal inconnu.

**3.** Procédé selon l'une quelconque des revendications précédentes, comprenant en outre l'étape (3) de génération de la base de données en utilisant un ou plusieurs échantillons d'un signal particulier ($10_a$-$10_n$) émis sous des conditions contrôlées depuis lesdits un ou plusieurs dispositifs connus.

**4.** Procédé selon la revendication 3, selon lequel une pluralité de signaux d'apprentissage est obtenue de la part d'un ou plusieurs des dispositifs connus et stockés dans la base de données (1), chaque échantillon étant prélevé lorsque le dispositif connu fonctionne à une valeur différente d'un ou plusieurs paramètres choisis.

**5.** Procédé selon la revendication 4, selon lequel les paramètres sont la température, la puissance d'émission et l'âge.

**6.** Procédé selon l'une quelconque des revendications précédentes, selon lequel un filtrage préliminaire des échantillons est effectué dans la base de données d'apprentissage pour déterminer un sous-ensemble de signaux d'apprentissage qui sont comparés avec le signal en provenance du dispositif d'émission.

**7.** Procédé selon la revendication 6, selon lequel les signaux d'apprentissage du sous-ensemble sont modifiés pour des effets de fréquence, de décalage dans le temps et de canal.

**8.** Procédé selon la revendication 7, selon lequel un ou plusieurs échantillons de la base de données de formation sont utilisés plusieurs fois, en ayant à chaque fois une valeur différente pour un ou plusieurs des paramètres suivants : phase de trajet, décalage en fréquence et synchronisation dans le temps.

**9.** Procédé selon l'une quelconque des revendications précédentes, selon lequel le signal connu émis est un préambule de canal d'accès aléatoire (RACH) prédéterminé.

**10.** Procédé selon l'une quelconque des revendications précédentes, selon lequel le signal en provenance du dispositif d'émission est fractionné en un certain nombre de fragments (6) et chaque fragment est comparé avec les signaux de la base de données d'apprentissage.

**11.** Procédé selon l'une quelconque des revendications précédentes, selon lequel un signal provenant de la base de données d'apprentissage est comparé une pluralité de fois avec le signal en provenance du dispositif d'émission dans une boucle itérative, chaque comparaison étant effectuée avec un traitement différent appliqué au signal par le dispositif connu et, lorsqu'une valeur minimale d'une différence entre le signal d'apprentissage particulier et le signal du dispositif d'émission est détectée, le traitement de ce signal d'apprentissage est terminé.

**12.** Appareil d'identification d'un dispositif d'émission, comprenant
des moyens (3) pour recevoir un signal émis depuis le dispositif d'émission soumis aux essais ;
des moyens (4) pour recevoir des signaux d'apprentissage émis depuis une base de données d'apprentissage (1) ; et
un compensateur adaptatif (4) pour comparer le signal en provenance du dispositif d'émission avec les signaux d'apprentissage afin de déterminer une puissance résiduelle pour chaque comparaison et pour comparer les puissances résiduelles afin de déterminer l'identité du dispositif d'émission, la base de données d'apprentissage contenant une pluralité de signaux d'apprentissage et l'appareil étant adapté pour soumettre un ou plusieurs de ceux-ci à un traitement de retard et/ou de déphasage afin de simuler les effets de trajet multiple.

**13.** Appareil selon la revendication 12, avec lequel le compensateur adaptatif comprend un filtre adaptatif (45) pour faire varier le retard et/ou la phase des signaux d'apprentissage provenant de la base de données d'apprentissage.

**14.** Appareil selon la revendication 13, comprenant des moyens (44) pour modifier la fréquence des signaux d'apprentissage provenant de la base de données d'apprentissage.

Unknown phone transmits
a single RACH preamble
constructed from the
same identical logical
symbol sequence as
contained in all training
data.

Sequence=S

Unknown phone
transmits RACH
preamble

$3$

$4$

Receiver

Joint
estimation-
classification
algorithm
against all N
candidates

$5$

Candidate
phone number
to which the
input burst
belongs

unknown

$2$

$P_{TX}=P$ for phone
unknown

Multi path wireless
channel.

Training

Database

$1$

FIG 1

EP 2 383 915 B1

2

unknown

$P_{TX}=P$ for phone unknown

C

Multi path wireless channel.

3

Receiver

6

Split into F fragments

Training Database

For all N candidates

Joint estimation-classification algorithm on each fragment f

4a

Recombine residual errors for each fragment f to form total residual error.

4b

Candidate phone number to which the input burst belongs

FIG 2

EP 2 383 915 B1

Each phone transmits a
RACH preamble
constructed from identical
logical symbol sequence.
This is repeated W times.

Sequence=S

EP 2 383 915 B1

Phones 1..N

1 $10a$

2 $10b$

N $10_N$

$P_{TX}=P$ for all N
phones

Non multi path
channel.

$C'$

Receiver $30$

Training
database
creation $31$

Training

Training
Database $1$

Training involves frequency
correcting each received preamble.
Then the mean of the W preambles
for each phone is computed and
stored in the database.

FIG 3

## 41

n0-th signal

Channel plus noise

Received signal

Adaptive filter  45

42  n-th residual power

−

Delay → Tap 1

n-th signal candidate

43

Frequency offset correction

44

461 ... 471

46L  47L

Delay → Tap L

FIG 4

**EP 2 383 915 B1**

**Patent documents cited in the description**

- US 2009305665 A

- US 2007025265 A